# EUROPEAN PATENT SPECIFICATION

(11) **EP 2 985 100 B1**
(45) Date of publication and mention of the grant of the patent: **11.12.2019**
(21) Application number: 14180683.6
(22) Date of filing: 12.08.2014
(51) Int. Cl.: B23C 5/20, B23C 5/22, B23C 5/08, B23C 5/12

(54) **A cutter system for profile milling**
Schneidevorrichtung zum Profilfräsen
Système de coupe pour le profilage à la fraise

(43) Date of publication of application: 17.02.2016
(73) Proprietor: LSAB Sverige AB, 770 70 Långshyttan (SE)
(72) Inventor: Nilsson, Berndt, 312 36 Laholm (SE); Idoffsson, Jens, 312 94 Laholm (SE)
(74) Representative: AWA Sweden AB

(56) References cited:
- EP-A2- 0 103 480
- WO-A1-2005/080037
- US-A- 1 691 983

## Description

### Technical field

The present application relates to the field of cutter systems for profile milling, and in particular to a cutter system according to the preamble of claim 1.

Such a cutter system is known from EP 0 103 480 A2.

### Background of the invention

Profile milling is well known in the art. Cutter systems for profile milling are available in many forms depending on for example the application, the milling technique to be used and the material to be profiled. A cutter system comprises, in general, a cutter head provided with one or more cutting edges in some form.

The present application will relate to a type of cutter head which is provided with one or more exchangeable insert knives. Each insert knife may be provided in a circumferential slot of the cutter head. An insert knife typically comprises a cutting edge which protrudes from the cutter head when the insert knife is mounted thereto.

When a work piece is fed through the milling machine, the rotating cutter head forms a profile with a design that is defined by the form of the insert knife with its cutting edge. The profile could for example be a rounded profile along an edge portion of a wood board.

The work piece material can be for example metal, wood or plastics. The insert knives can be fixed to the cutter head in different ways. One way is to attach the insert knife by means of a screw or the like which is arranged through the insert knife and into the cutter head material. Another way is to wedge the insert knife in a slot of the cutter head by means of a wedge element. The insert knife may in the latter case be arranged along a side wall of the slot and the wedge element may be arranged between the insert knife and an opposite side wall of the slot.

When using a wedge element for fixing the insert knife to the cutter head problems with position stability of the insert knife during use of the cutter head for profile milling may occur. Hence, there is a need for an improved insert knife and an improved cutter system comprising a cutter head and an insert knife.

WO2005/080037 A1 discloses a slot milling cutter comprising a slot, provided with opposed first serrations, and a cutting insert, provided with second serrations which are arranged on the main surfaces of the cutting insert, wherein a stabilization of the cutting insert is effected in the radial direction of the slot milling cutter by co-operation between the first and second serrations.

### Summary of the invention

An object of the present invention is to provide an improved insert knife for a cutter head and an improved cutter system comprising a cutter head and the improved insert knife. A particular object of the invention is to provide an insert knife with improved position stability when inserted into a cutter head and to provide a cutter system comprising a cutter head and an insert knife wherein the position stability of the insert knife is improved.

The invention provides a cutter system for profile milling according to claim 1.

The cutter system comprises a cylindrical cutter head provided with a slot transverse its circumference, the slot having opposite side wall surfaces, and an insert knife arranged in the slot and extending in an outward direction as seen in a cross-section of the cutter head. The insert knife comprising a first surface abutting a first of the opposite side wall surfaces of the slot, the first surface having a ridged first portion comprising a plurality of ridges and a flat second portion, and a cutting edge which protrudes past the first of the opposite side wall surfaces of the slot as seen in the outward direction. The insert knife is oriented with the flat second portion farther out than the ridged first portion. The insert knife is oriented such that the ridges of the ridged first portion are received in complementary grooves in the first of the opposite side wall surfaces of the slot.

The invention is based on the realization that a combination of the ridged portion and the flat portion provides improved position stability for the insert knife. The improved position stability resides in that the ridged portion provides stability in view of the outward direction of the cutter head and that the flat portion provides stability in view of the rotational direction of the cutter head. In other words, the ridges of the ridge portion bears strains on the insert knife in the outward direction and the flat portion bears strains on the insert knife in the rotational direction. This combination improves the position stability in relation to an insert knife having only one of these types of portions as contact surface against the support surface of the cutter head.

The ridged portion may also permit a successively adjustment of the insert knife in the outward direction of the cutter head.

The use of a ridged portion on the insert knife requires that the cutter head, which with the insert knife is to be used, is provided with complementary grooves for receiving the ridges. The grooves are typically formed by use of a template based on the particular type of insert knife. Due to for example wear or lack of precision when forming the grooves, the insert knife may fit in a non-optimal manner by that small spaces are formed between the grooved portion of the support surface and the ridged portion of the insert knife. These small spaces do not affect the position stability in the outward direction as much as the position stability in the rotational direction which can be notably reduced, leading to a rugged surface finish in the work piece. According to the invention, the cutter system and the insert knife therein can stand a higher degree of misfit between the ridged first portion and the grooved portion in the support surface thanks to the flat portion which maintains the stability in view of the rotational direction. Thus, the grooved portion does not need to be maintained with respect to its precision to such a high degree and insert knives can be moved between different grooved portions, within the same or between different cutter heads, with less impact on the position stability of the insert knife.

By outward direction in view of the center axis of the cutter head is meant a direction transverse the periphery of the cylindrical cutter head. In other words, the outward direction is any direction which is not tangential to the cylindrical cutter head. In one embodiment, the outward direction is a radial direction of the cutter head.

The cutter system may comprise a wedge element arranged between the second of the opposite side wall surfaces of the slot and a second surface of the insert knife opposite to the first surface of the insert knife. The insert knife is thereby wedged in the slot.

In one embodiment, the ridged first portion has 2-7 ridges. It has been realized that a number of ridges in this interval provides increased position stability in view of the outward direction while not affecting the position stability in the rotational direction to a high degree if there is a misfit between the ridged portion and the grooves in the support surface. Thus, a good balance between stability in the outward direction and high level of fail safety is provided.

In one embodiment, the plurality of ridges have a height of not more than 4 mm, the height being measured from the bottom of a valley in between two ridges to the top of a ridge. It has been realized that ridges with a height in this interval provides a good stability in the outward direction. A height above 4 mm is not preferred since the mounting precision in the axial direction will be less accurate for heights above 4 mm.

In one embodiment the plurality of ridges protrude from the first surface of the insert knife in a direction normal to said first surface. Manufacturing of the insert knife and of the cutter head, in particular with respect to providing the grooves in the support surface, may thus be facilitated.

In one embodiment, the plurality of ridges extends along the first surface of the insert knife in a direction perpendicular to the outward direction of the insert knife. Forces in the outward direction may thereby be counteracted in an optimal manner.

The cutter system is preferably arranged for profile milling in wood materials.

In an embodiment an insert knife for the cylindrical cutter head is provided. The insert knife comprises a first surface arranged to abut a support surface of the cutter head, the first surface having a ridged first portion, comprising a plurality of ridges, and a flat second portion and a cutting edge. The insert knife is arranged to extend in an outward direction as seen in a cross-section of the cutter head with the flat second portion farther out than the ridged first portion, and with the cutting edge protruding past the support surface as seen in the outward direction. The insert knife is arranged to be oriented such that the ridges of the ridged first portion are received in complementary grooves in the support surface of the cutter head.

The support surface of the cutter head is formed by a side wall in a slot of said cutter head.

It is noted that the invention relates to all possible combinations of features recited in the claims, within the scope of the invention as defined by the claims.

### Brief description of the drawings

This and other aspects of the present invention will now be described in more detail, with reference to the enclosed drawings showing embodiments of the invention.
Figure 1 is a partly exploded view of a cutter head with insert knives according to an embodiment.
Figure 2 is a view from the side of one of the insert knives in Figure 1.
Figure 3 is an enlarged view of a part of the insert knife in Figure 2.
Figure 4 is a view towards a first surface of the insert knife in Figure 1.
Figures 5 and 6 are view from the side of different embodiments of a cutter head.
Figure 7 illustrates yet another embodiment of a cutter head.
Figure 8 is a view towards a first surface of one of the insert knives in Figure 7.

### Detailed description of preferred embodiments

The present invention will now be described more fully hereinafter with reference to the accompanying drawings, in which currently preferred embodiments of the invention are shown. This invention may, however, be embodied in many different forms and should not be construed as limited to the embodiments set forth herein. Rather, these embodiments are provided for thoroughness and completeness, and for fully conveying the scope of the invention to the skilled person.

The invention will be disclosed with reference to a profile cutter system. The invention is however applicable to other types of cutter systems as well where insert knives are utilized.

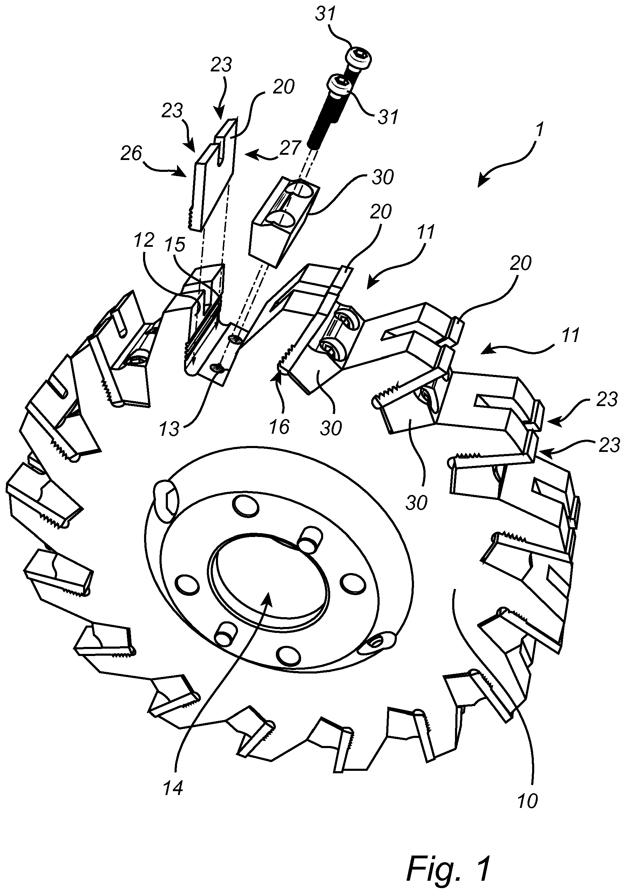

To start with, the general construction of a cutter system 1 for profile milling according to one embodiment will be disclosed with reference to Figures 1-3.

The cutter system 1 is illustrated in Figure 1. The cutter system 1 comprises a cylindrical cutter head 10 provided with a plurality of slots 11. The slots 11 extend in a direction transverse to the periphery of the cutter head 10. In this embodiment, the slots 11 extend in a direction normal to the periphery of the cutter head 10. Each slot 11 is defined by opposite side wall surfaces 12, 13. The cutter head 10 is provided with a through hole 14 along its center axis. The cutter head 10 can by means of the through hole 14 be arranged on a shaft in a cutter machine.

An insert knife 20 is provided in each of the slots 11. When describing the construction of each insert knife 20, reference will be given to a single insert knife 20. The construction applies to each insert knife 20 in the cutter system 1.

The insert knife 20 is wedged in the slot 11 by means of a wedge element 30. The insert knife 20 has a flat shape with a first surface 26 and an opposite second surface 27.

The insert knife 20 is arranged in an outward direction as seen in a cross-section of the cylindrical cutter head 10. The insert knife 20 thus extends in the outward direction. The orientation direction of the insert knife 20 is defined as the direction in which the insert knife 20 extends which is the same as the outward direction when the insert knife 20 is mounted on the cutter head 10.

The insert knife 20 is arranged with its first surface 26 abutting the first of the opposite side wall surfaces 12 of the slot 11. The first of the opposite side wall surfaces 12 forms a support surface for the insert knife 20. The wedge element 30 is arranged between the second surface 27 of the insert knife 20 and the second of the opposite side wall surfaces 13 of the slot 11. The wedge element 30 is fixed to the cutter head 10 by means of screws 31 which are inserted through the wedge element 30 and into the cutter head 10 in an inward direction as seen in a cross-section of the cylindrical cutter head 10.

The insert knife 20 comprises a cutting edge 23 which in this embodiment is divided into two cutting edge portions. The insert knife 20 is arranged such that the cutting edge 23 protrudes past the first of the opposite side wall surfaces 12 of the slot 11 as seen in the outward direction.

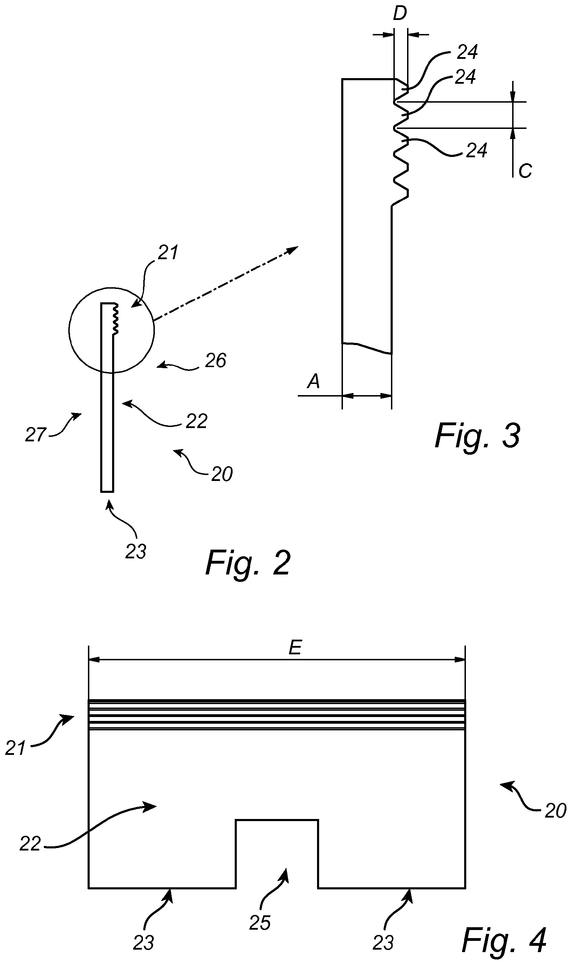

The insert knife 20 is seen from the side in Figure 2. The profiles of the first surface 26 and the opposite second surface 27 are illustrated. The second surface 27 is flat. The first surface 26 comprises a ridged portion 21 and a flat portion 22. The ridged portion 21 and the flat portion 22 are arranged adjacent each other. The ridged portion 21 is arranged beyond the flat portion 27 in view of the cutting edge 23.

An enlargement of the indicated area in Figure 2 is illustrated in Figure 3. The ridged portion 21 comprises a plurality of ridges 24. Returning to Figure 1, it can be seen that the insert knife 20 is oriented such that the flat portion 22 is arranged farther away than the ridged portion 21.

The cutter head 10 is provided with a grooved portion 15. The grooved portion 15 comprises grooves which are formed complementary to the ridges 24. Thus, the ridges 24 can be received by the grooves. The grooved portion 15 forms part of the first of the opposite side wall surfaces 12 of the slot 11.

The first surface 26 of the insert knife 20 abuts the first of the opposite side wall surfaces 12 of the slot 11 by that at least some of the plurality of ridges 24 is received in the complementary grooves of the grooved portion 15 and by that the flat second portion 22 abuts a flat portion of the first of the opposite side wall surfaces 12.

The invention is based on the realization that the combination of the ridged first portion 21 and the flat second portion 22 provides improved position stability for insert knife 20. The improved position stability resides in that the plurality of ridges 24, when received in the grooves of the grooved portion 15, provides position stability in the outward direction of the cutter head 10; and that the flat second portion 22 provides position stability in view of the rotational direction of the cutter head 10. In other words, the ridges 24 of the ridged first portion 21 bears strains on the insert knife 20 in the outward direction and the flat second portion 22 bears strains on the insert knife 20 in the rotational direction. The combination improves the overall position stability in relation to an insert knife having only one of these types of portions as contact surface against a support surface of a cutter head.

Due to for example wear or lack of precision when forming the grooves of the grooved portion 15, the insert knife 20 may fit in a non-optimal manner in that small spaces are formed between the grooved portion 15 and the ridged portion 21. These small spaces do not affect the position stability in the outward direction as much as the position stability in the rotational direction which can be notably reduced, leading to a rugged surface finish in the work piece. According to the invention, the cutter system 1 and the insert knife 20 therein can stand a higher degree of misfit between the ridged first portion 21 and the grooved portion 15 thanks to the flat portion 22 which maintains the position stability in view of the rotational direction. Thus, the grooved portion 15 does not need to be maintained with respect to its precision to such a high degree and the insert knife 20 can be moved between different grooved portions, within the same or between different cutter heads, with less impact on the position stability of the insert knife 20.

The ridged first portion 21 may also permit a successively adjustment of the insert knife 20 in the outward direction of the cutter head 10. One way to enable such an adjustment is to locate the grooves in the grooved portion 15 slightly above a bottom surface of the slot 11. When the insert knife 20 is oriented such that the ridged portion 21 is aligned with the grooved portion 15, a space 16 is formed, as seen in the outward direction, between the insert knife 20 and the bottom surface of the slot 11. The insert knife 20 can thereby be adjusted inwards in order to set how much the cutting edge 23 should protrude past the first of the opposite side wall surfaces 12. Alternatively, the insert knife 20 may be set in the lowermost position when mounted for the first time, and successively be adjusted outwards over time when the cutting edge 23 is gradually worn down.

Going more into detail, the construction of the insert knife 20 of this embodiment will now be disclosed with reference to Figure 3.

The number of ridges 24 is five in this embodiment. The number of ridges is defined as the number of peaks in the ridged portion 21, when the insert knife 20 is seen from the side as in Figure 3. The ridged portion 21 comprises peaks and valleys.

It has been realized a number of ridges 24 in the interval of 2-7 is advantageous in view of the insert knife's 20 position stability when mounted on the cutter head 10. A number in this interval may provide particularly satisfactory position stability in the outward direction while not affecting the position stability in the rotational direction to a high degree even if a misfit exists between the ridged portion 21 and the grooves in the support surface. Thus, a good balance between position stability in the outward direction and high level of fail safety is provided.

Each ridge 24 protrudes from the insert knife 20 when viewed from the side. Each ridge 24 also extends along the first surface 26 of the insert knife 20. The ridged portion 21 thus forms a rippled surface portion.

In the illustrated embodiment, each ridge 24 protrudes from the first surface 26 of the insert knife 20 in a direction normal to the first surface 26. Moreover, each ridge extends along the first surface 26 of the insert knife 20 in a direction perpendicular to the outward direction. In other words, the ridges 24 extend along the viewing direction of Figure 3. The ridges 24 extend in parallel.

The ridges 24 are having a height D, the height D being measured from the bottom of a valley in between two ridges to the top of a ridge. The height D is preferably not more than 4 mm. It has been realized that ridges with a height of maximum 4 mm provides a good stability in the outward direction. A height above 4 mm is not preferred since the mounting precision in the axial direction will be less accurate for heights above 4 mm.

Each ridge 24 has a width C, defined by the distance between the centers of two adjacent valleys, of 1.5 to 2 mm.

The insert knife 20 has a thickness A of 3 - 4 mm as measured at the flat portion 27. However, it is to be noticed that other insert knife thicknesses are also possible to use.

Figure 4 is a view towards the first surface 26 of the insert knife 20. The ridges of the ridged first portion 21 extend along the whole width E, which is 60 mm in this embodiment. However, it is to be noticed that the insert knife may have another width. The width of the insert knife depends on the geometry of the cutter head.

The cutting edge 23 is provided with a slit 25. The slit 25 extends into the flat portion 22 of the insert knife 20. The cutting edge 23 and the design of the slit 25 define the profile which is formed in the work piece. In this embodiment, the insert knife 20 may provide an elongated projection, defined by the slit 25, along e.g. an edge of a wood board.

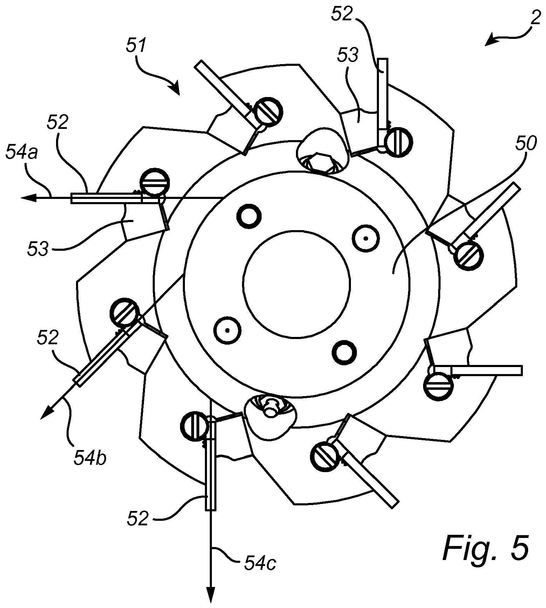

Figure 5 illustrate another embodiment of a cutter system 2. The cutter system 2 comprises a cylindrical cutter head 50 provided with circumferential slots 51, i.e. slots 51 extending transverse the circumference of the cylindrical cutter head 50. With similar construction as disclosed in connection to Figure 1, insert knives 52 are inserted into the slots 51. Each insert knife 52 is wedged by means of a wedge element 53.

Each insert knife 52 is arranged in an outward direction as seen in a cross-section of the cylindrical cutter head 50. By outward direction as seen in a cross-section of the cylindrical cutter head 10 is meant a direction transverse the periphery of the cylindrical cutter head 10. In other words, the outward direction is a non-tangential direction of the cylindrical cutter head 10. Figure 5 illustrates three examples of outward directions 54a, 54b, 54c wherein an insert knife 52 is arranged to extend in each of these direction.

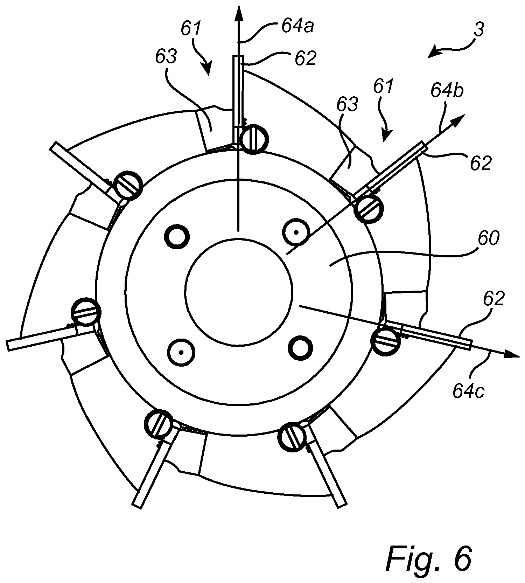

Figure 6 illustrates yet another embodiment of a cutter system 3. The cutter system 3 comprises a cutter head 60 with insert knives 62 which are wedged into slots 61 by means of wedge elements 63. This construction is similar to the construction disclosed in connection to Figure 1.

The insert knives 62 are arranged to extend in a specific outward direction being the radial direction of the cutter head 60. Three examples of the specific outward direction being the radial direction 64a, 64b, 64c are illustrated.

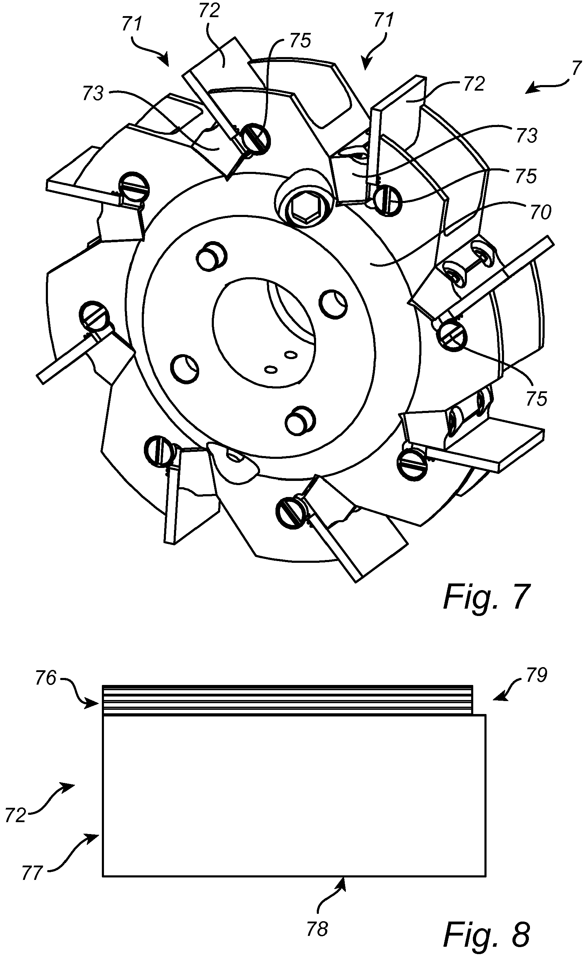

Another embodiment of a cutter system 7 will now be disclosed with reference to Figures 7 and 8. A cutter system 7 is illustrated in Figure 7. The cutter system 7 comprises a cutter head 70 provided with insert knives 72 which are wedged into slots 71 by means of wedge elements 73. This construction is similar to the construction disclosed in connection to Figure 1.

One of the insert knives 72 are illustrated as seen towards its first surface in Figure 8. The first surface is the one which is arranged to abut a support surface of the cutter head 70. One of two opposite side walls of each slot 71 forms a support surface for the insert knife 72 arranged in the slot, in similar to previously disclosed embodiments.

The insert knife 72 is provided with a recess 79 being open towards a side of the insert knife 72. The recess 79 may be formed, as in this embodiment, by cutting out the corner of the originally rectangular shaped insert knife 72, as seen towards its first surface. The recess 79 is provided in the ridged portion 76 of the insert knife 72.

When the insert knife 72 is arranged in the cutter head 70, a screw 75 is inserted into the cutter head 70 at the recess 79 of each insert knife 72. The screw 75 is inserted essentially parallel to the axial direction of the cylindrical cutter head 70. The screw 75 is arranged at a position such that a part of the screw 75, formed by a part of the screw head in the illustrated embodiment, is received in the recess 79 of the insert knife 72.The insert knife 72 is thereby prevented from moving sideways in a direction parallel to the axial direction of the cylindrical cutter head 70.

The insert knife 72 may be provided with a further recess (not illustrated) at the opposite corner in the ridged portion 76 as seen towards the first surface of the insert knife 72. Similar to the arrangement of the screw 75 from one base side of the cylindrical cutter head 70, a further screw may be arranged from the other base side. The insert knife 72 is thereby prevented from moving sideways in both directions parallel to the axial direction of the cylindrical cutter head 70.

The illustrated embodiments show a ridged portion with ridges that are raised above the level of the flat surface. In alternative embodiments, the ridged portion can lowered into and below the level of the flat surface.

It is understood that these embodiments may be combined or altered within the scope of the claims.

## Claims

1. A cutter system for profile milling, the cutter system comprising:
a cylindrical cutter head (10, 50, 60, 70) provided with a slot (11, 51, 61, 71) transverse its circumference, the slot (11, 51, 61, 71) having opposite side wall surfaces (12, 13), and
an insert knife (20, 52, 62, 72) arranged in the slot (11, 51, 61, 71) and extending in an outward direction (54a, 54b, 54c, 64a, 64b, 64c) as seen in a cross-section of the cutter head (10, 50, 60, 70), the insert knife (20, 52, 62, 72) comprising a cutting edge (23) which protrudes past a first of the opposite side wall surfaces (12) of the slot as seen in the outward direction (54a, 54b, 54c, 64a, 64b, 64c),
wherein the insert knife (20, 52, 62, 72) further comprises a first surface (26) abutting the first of the opposite side wall surfaces (12) of the slot (11, 51, 61, 71),
**characterized in that** the first surface (26) has a ridged first portion (21), comprising a plurality of ridges (24), and a flat second portion (22),
that the insert knife (20, 52, 62, 72) is oriented with the flat second portion (22) farther out than the ridged first portion (21), and
that the first surface (26) of the insert knife (20) abuts the first of the opposite side wall surfaces (12) of the slot (11, 51, 61, 71) by that at least some of the plurality of ridges (24) are received in complementary grooves in the first of the opposite side wall surfaces (12) and by that the flat second portion (22) abuts a flat portion of the first of the opposite side wall surfaces (12).

2. The cutter system according to claim 1, further comprising:
a wedge element (30, 53, 63, 73) arranged between the second of the opposite side wall surfaces (13) of the slot (11, 51, 61, 71) and a second surface (27) of the insert knife (20, 52, 62, 72) opposite to the first surface (26) of the insert knife (20, 52, 62, 72),
whereby the insert knife (20, 52, 62, 72) is wedged in the slot (11, 51, 61, 71).

3. A cutter system according to any one of claims 1-2, wherein the ridged first portion (21) has 2-7 ridges.

4. The cutter system according to any one of claims 1-3, wherein the ridges (24) of the ridged first portion (21) have a height (D) of not more than 4 mm.

5. The cutter system according to any one of claims 1-4, wherein the plurality of ridges (24) extends along the first surface (26) of the insert knife (20, 52, 62, 72) in a direction perpendicular to the outward direction (54a, 54b, 54c, 64a, 64b, 64c).

6. The cutter system according to any one of claims 1-6, wherein the plurality of ridges (24) protrudes from the first surface (26) of the insert knife (20, 52, 62, 72) in a direction normal to said first surface (26).

7. The cutter system according to any one of claims 1-5, wherein the outward direction is a radial direction (64a, 64b, 64c) of the cutter head (60).

## Patentansprüche

1. Schneidsystem zum Profilfräsen, wobei das Schneidsystem Folgendes aufweist:
einen zylindrischen Schneidkopf (10, 50, 60, 70), der mit einem Schlitz (11, 51, 61, 71) querlaufend zu seinem Umfang versehen ist, wobei der Schlitz (11, 51, 61, 71) gegenüberliegende Seitenwandflächen (12, 13) aufweist, und ein Einsetzmesser (20, 52, 62, 72), das in dem Schlitz (11, 51, 61, 71) angeordnet ist und sich in einer Richtung (54a, 54b, 54c, 64a, 64b, 64c) nach außen erstreckt, wie in einem Querschnitt des Schneidkopfs (10, 50, 60, 70) gesehen, wobei das Einsetzmesser (20, 52, 62, 72) eine Schneidkante (23) aufweist, die über eine erste der gegenüberliegenden Seitenwandflächen (12) des Schlitzes vorsteht, wie in der Richtung (54a, 54b, 54c, 64a, 64b, 64c) nach außen gesehen,
wobei
das Einsetzmesser (20, 52, 62, 72) ferner eine erste Fläche (26) aufweist, die an der ersten der gegenüberliegenden Seitenwandflächen (12) des Schlitzes (11, 51, 61, 71) anliegt,
**dadurch gekennzeichnet, dass**
die erste Fläche (26) einen gezahnten ersten Abschnitt (21), der eine Vielzahl an Zähnen (24) aufweist, und einen flachen zweiten Abschnitt (22) aufweist, das Einsetzmesser (20, 52, 62, 72) derart ausgerichtet ist, dass der flache zweite Abschnitt (22) weiter außen ist als der gezahnte erste Abschnitt (21), und
die erste Fläche (26) des Einsetzmessers (20) an der ersten der gegenüberliegenden Seitenwandflächen (12) des Schlitzes (11, 51, 61, 71) anliegt, wodurch mindestens einige der Vielzahl an Zähnen (24) in zugehörigen Nuten in der ersten der gegenüberliegenden Seitenwandflächen (12) aufgenommen werden, und wodurch der flache zweite Abschnitt (22) an einem flachen Abschnitt der ersten der gegenüberliegenden Seitenwandflächen (12) anliegt.

2. Schneidsystem nach Anspruch 1, das ferner Folgendes aufweist:
ein Keilelement (30, 53, 63, 73), das zwischen der zweiten der gegenüberliegenden Seitenwandflächen (13) des Schlitzes (11, 51, 61, 71) und einer zweiten Fläche (27) des Einsetzmessers (20, 52, 62, 72) gegenüberliegend der ersten Fläche (26) des Einsetzmessers (20, 52, 62, 72) angeordnet ist,
wodurch das Einsetzmesser (20, 52, 62, 72) in dem Schlitz (11, 51, 61, 71) festgeklemmt wird.

3. Schneidsystem nach einem beliebigen der Ansprüche 1 bis 2, wobei der gezahnte erste Abschnitt (21) zwei bis sieben Zähne aufweist.

4. Schneidsystem nach einem beliebigen der Ansprüche 1 bis 3, wobei die Zähne (24) des gezahnten ersten Abschnitts (21) eine Höhe (D) von höchstens 4 mm aufweisen.

5. Schneidsystem nach einem beliebigen der Ansprüche 1 bis 4, wobei sich die Vielzahl an Zähnen (24) entlang der ersten Fläche (26) des Einsetzmessers (20, 52, 62, 72) in einer Richtung senkrecht zu der Richtung (54a, 54b, 54c, 64a, 64b, 64c) nach außen erstreckt.

6. Schneidsystem nach einem beliebigen der Ansprüche 1 bis 6, wobei die Vielzahl an Zähnen (24) von der ersten Fläche (26) des Einsetzmessers (20, 52, 62, 72) in einer Richtung normal zu der ersten Fläche (26) vorsteht.

7. Schneidsystem nach einem beliebigen der Ansprüche 1 bis 5, wobei die Richtung nach außen eine radiale Richtung (64a, 64b, 64c) des Schneidkopfs (60) ist.

## Revendications

1. Système de coupe pour le profilage à la fraise, le système de coupe comprenant :
un tête de coupe (10, 50, 60, 70) cylindrique dotée d'une fente (11, 51, 61, 71) transversale à sa circonférence, la fente (11, 51, 61, 71) ayant des 5surfaces de parois latérales opposées (12, 13), et
une lame d'insert (20, 52, 62, 72) agencée dans la fente (11, 51, 61, 71) et s'étendant dans une direction extérieure (54a, 54b, 54c, 64a, 64b, 64c), vu en section transversale de la tête de coupe (10, 50, 60, 70), la lame d'insert (20, 52, 62, 72) comprenant un bord de coupe (23) qui fait saillie au-delà d'une 10première des surfaces de parois latérales opposées (12) de la fente, vu dans la direction extérieure (54a, 54b, 54c, 64a, 64b, 64c),
dans lequel
la lame d'insert (20, 52, 62, 72) comprend en outre une première surface (26) adjacente à la première des surfaces de parois latérales opposées (12) de la 15fente (11, 51, 61, 71),
**caractérisé en ce que** la première surface (26) a une première partie nervurée (21) comprenant une pluralité de nervures (24), et une seconde partie plane (22),
que la lame d'insert (20, 52, 62, 72) est orientée avec la seconde partie plane 20(22) plus vers l'extérieur que la première partie nervurée (21), et
que la première surface (26) de la lame d'insert (20) est adjacente à la première des surfaces de parois latérales opposées (12) de la fente (11, 51, 61, 71) **en ce qu'**au moins une partie de la pluralité de nervures (24) est reçue dans des rainures complémentaires dans la première des surfaces de parois 25latérales opposées (12) et **en ce que** la seconde partie plane (22) est adjacente à une partie plane de la première des surfaces de parois latérales opposées (12).

2. Système de coupe selon la revendication 1, comprenant en outre :
30un élément de coin (30, 53, 63, 73) agencé entre la seconde des surfaces de parois latérales opposées (13) de la fente (11, 51, 61, 71) et une seconde surface (27) de la lame d'insert (20, 52, 62, 72) opposée à la première surface (26) de la lame d'insert (20, 52, 62, 72),
ce par quoi la lame d'insert (20, 52, 62, 72) est calée dans la fente (11, 51, 61, 71). 5

3. Système de coupe selon l'une quelconque des revendications 1 - 2, dans lequel la première partie nervurée (21) a 2-7 nervures.

4. Système de coupe selon l'une quelconque des revendications 1 - 3, 10dans lequel les nervures (24) de la première partie nervurée (21) ont une hauteur (D) inférieure ou égale à 4 mm.

5. Système de coupe selon l'une quelconque des revendications 1 - 4, dans lequel la pluralité de nervures (24) s'étend le long de la première 15surface (26) de la lame d'insert (20, 52, 62, 72) dans une direction perpendiculaire à la direction extérieure (54a, 54b, 54c, 64a, 64b, 64c).

6. Système de coupe selon l'une quelconque des revendications 1 - 6, dans lequel la pluralité de nervures (24) fait saillie de la première surface (26) 20de la lame d'insert (20, 52, 62, 72) dans une direction normale à ladite première surface (26).

7. Système de coupe selon l'une quelconque des revendications 1 - 5, dans lequel la direction extérieure est une direction radiale (64a, 64b, 64c) de 25la tête de coupe (60).
